# EUROPEAN PATENT SPECIFICATION

(11) **EP 3 939 384 B1**
(45) Date of publication and mention of the grant of the patent: **08.03.2023**
(21) Application number: 19711340.0
(22) Date of filing: 14.03.2019
(51) Int. Cl.: H05B 6/12

(54) **INDUCTION COOKING DEVICE AND METHOD**
INDUKTIONSKOCHVORRICHTUNG UND -VERFAHREN
DISPOSITIF DE CUISSON PAR INDUCTION ET PROCÉDÉ

(43) Date of publication of application: 19.01.2022
(73) Proprietor: Vestel Elektronik Sanayi ve Ticaret A.S., 45030 Manisa (TR)
(72) Inventor: BILGIN, Mert Serdar, 45030 Manisa (TR); AK, Yusuf, 45030 Manisa (TR)
(74) Representative: Kehl, Ascherl, Liebhoff & Ettmayr Patentanwälte Partnerschaft mbB
(86) International application number: PCT/EP2019/056463
(87) International publication number: WO 2020/182314

(56) References cited:
- EP-A1- 3 048 861
- GB-A- 2 160 969
- JP-A- H0 233 884
- US-A- 4 114 009

## Description

### TECHNICAL FIELD

The invention relates to an induction cooking device and a respective method.

### BACKGROUND

Although applicable to any inductive heating apparatus, the present invention will mainly be described in conjunction with induction cookers.

In modern cookers energy, and therefore heat, may be transferred to the respective cooking vessel inductively. To this end, an induction coil may be provided under the cooking surface and an alternating field may be generated with the induction coil. The varying magnetic field will then induce a current flow in the bottom surface of the cooking vessel. The current flow will generate heat in the bottom of the cooking vessel and the cooking goods in the cooking vessel will heat up accordingly.

The induction coil and the bottom of the cooking vessel may be seen as a kind of coupled inductances. This means that the magnetic properties of the cooking vessel influence the inductance of the induction coil. It is known that different cooking vessels may comprise different magnetic properties. Therefore, the control of the induction coil is usually adapted to accommodate the different types of cooking vessels.

For example, the modulation, i.e. frequency, amplitude or the like, of the current through the induction coil may be changed in induction cookers. Further, algorithms may be used to detect the pot type and size, and the modulation and switching algorithm may be selected according to a detected pot type and size.

However, these control algorithms require complex computations.

Document JP H02 33884 A discloses an induction cooking device that varies the distance between the induction coil and the cooking surface in order to optimize the impedance of the induction coil and to achieve maximum power transfer.

There is a need for providing a simplified control of induction cookers.

### SUMMARY OF THE INVENTION

The above stated problem is solved by the features of the independent claims. It is understood, that independent claims of a claim category may be formed in analogy to the dependent claims of another claim category.

Accordingly, it is provided:
An induction cooking device for heating a cooking vessel, the induction cooking device comprising a cooking surface comprising a cooking hob, an induction coil, a driving circuit electrically coupled to the induction coil, and a coil mount that is arranged under the cooking hob, wherein the induction coil is arranged on the coil mount and wherein the coil mount is configured to dynamically adapt the distance between the induction coil and the cooking surface based on a temperature of the induction coil and/or at least a component of the driving circuit, wherein the coil mount is configured to increase the distance between the induction coil and the cooking surface with increasing temperature of the induction coil and/or the at least one component of the driving circuit.

Further, it is provided:
A method for operating an induction cooking device with an induction coil and a driving circuit for heating a cooking vessel, the method comprising operating the induction coil with the driving circuit, and dynamically adapting the distance between the induction coil and the cooking surface based on a temperature of the induction coil and/or the at least one component of the driving circuit, wherein the distance is increased with increasing temperature of the induction coil and/or the at least one component of the driving circuit.

The present invention is based on the finding that different types of cooking vessels may comprise strongly varying ferromagnetic properties. Further, the present invention is based on the finding that the distance between the induction coil and the cooking vessel defines the impact of the ferromagnetic properties of the cooking vessel on the induction coil.

Usually, a parallel LC circuit is used to drive the induction coil of an induction cooking device. It is understood, that the term parallel LC circuit may refer to a circuit where the induction coil is the "L" component and a parallel capacitor is provided as the "C" component. The minimum driving current is required if the parallel LC circuit is operated at its' resonant frequency. Further, with a low magnetic coupling between the induction coil and the cooking vessel the impedance of the parallel LC circuit will be lower and the current through the parallel LC circuit will be higher. It is understood, that although not explicitly mentioned, the driving circuit may comprise such a parallel LC circuit and a respective control and switching arrangement.

The present invention especially takes into account that cooking vessels with poor ferromagnetic properties cause heterogeneous, irregular and increased current flows in the induction coil and the driving circuit. Such irregular current transitions cause major negative effects in the semiconductor. For example, they cause switching irregularities and loss of outline. Such effects in turn cause losses in the semiconductors and the semiconductors heat up.

The present invention therefore provides the coil mount that dynamically adapts the distance between the induction coil and the cooking surface, and therefore the cooking vessel. The coil mount increases the distance between the induction coil and the cooking surface with increasing temperature of the induction coil and/or at least a component of the driving circuit. The term "at least a component" of the driving circuit may e.g. refer to one or more of the switches in the driving unit that drive the current through the induction coil.

Therefore, if a cooking vessel with poor ferromagnetic properties is used, the induction coil and the driving circuit will heat up due to increased operating currents. This increase in temperature will cause the coil mount to lower the induction coil and increase the distance between cooking vessel and induction coil.

The increasing separation of the cooking vessel from the induction coil leads to a reduction of the impedance of the parallel LC circuit and to an increase of the current in the parallel LC circuit. However, the current irregularities caused by the cooking vessel with poor ferromagnetic properties are also reduced. The current irregularities caused by such a cooking vessel with poor ferromagnetic properties influence the temperature of the induction coil and the driving circuit more than the increasing current due to the reduced impedance. Therefore, the overall temperature of the induction coil and/or of the driving circuit is reduced by increasing the distance between the induction coil and a cooking vessel with poor ferromagnetic properties. After increasing the distance, the current flow is more regular and the semiconductor temperature is therefore positively influenced by the fact that the cooking vessel is spaced apart more from the induction coil.

With the present invention it is therefore possible to regulate the temperature of the induction coil and/or the driving circuit with a simple mechanical construction, i.e. the coil mount. The present invention requires no complex control algorithms to adapt the induction cooking device to the type of cooking vessel.

It is understood, that the term induction coil may refer to a single coil or to a group or plurality of coils that are provided for a single cooking hob. Further, it is understood, that the induction cooking device may comprise more than one cooking hob and respective induction coils. A single driving circuit may be provided per induction coil or group of induction coils. Alternatively, a single driving circuit may be provided for all induction coils in the induction cooking device.

Further embodiments of the present invention are subject of the further subclaims and of the following description, referring to the drawings.

In an embodiment, the coil mount may comprise a movable carrying structure configured to carry the induction coil, and a number, i.e. one or more, of actuators configured to change the distance of the movable carrying structure from the cooking surface.

The carrying structure may e.g. comprise non-ferromagnetic components, like e.g. plastic clips or the like, that may accommodate the induction coil. It is understood, that the carrying structure may e.g. be provided integrally with the induction coil. The carrying structure may e.g. be injection molded around the induction coil.

The actuator may e.g. be coupled to a structure of the induction cooking device and the carrying structure. The structure of the induction cooking device may be seen as a kind of base or bearing for the actuators.

In another embodiment, the actuators may comprise a flexible body and a phase change material provided in the flexible body.

The flexibly body may e.g. be a body that expands and contracts easily. Such a body may e.g. be made of rubber or other plastics. The flexibly body may be filled with a phase change material. The term "phase change material" refers to materials that at least soften with increasing temperature.

It is understood, that the actuators may be thermally coupled to the induction coil and/or the respective component(s) of the driving circuit. To this end, the mechanical arrangement and the position of the actuators in the induction cooking device may put the actuators in direct contact with the induction coil and/or the respective component(s) of the driving circuit. In addition or as alternative, heat transfer elements, like e.g. pieces of cooper or heat pipes or the like may also be provided between the induction coil and/or the respective component(s) of the driving circuit.

Therefore, if the induction coil and/or the respective component(s) of the driving circuit heat up, the heat will be transferred to the actuators and the phase change material in the actuators will change its' phase or at least soften with respect to lower temperatures. If the phase change material softens, the weight of the induction coil will push down on the actuators and the induction coil will be lowered.

With the help of phase change materials, a totally passive or mechanical arrangement may be provided for dynamically controlling the distance of the induction coil to the cooking surface.

In yet another embodiment, the phase change material may comprise salt hydrates and/or paraffins and/or bio-based phase change materials.

Salt hydrates consist of inorganic salts and water. Their melt point temperatures range between 15°C and 80°C. The advantages of salt hydrates are low material costs, high latent heat storage capacity, precise melting point, high thermal conductivity and inflammability.

Paraffins, typically, are derived from petroleum and have a waxy consistency at room temperature. Their melt point temperatures range between -8°C and 40°C. They have good thermal storage capacity and are proven to freeze without supercooling.

Bio-based phase change materials, PCMs, are organic compounds derived from animal fat and plant oils. Their melt point temperatures range between -40°C and 151°C. The most common bio-based PCMs are derived from fatty acids and have higher efficiency than salt hydrates and petroleum-based phase change material.

In a further embodiment, the actuators may comprise electromechanical actuation elements and respective driving circuits.

As alternative to a passive control as suggested above, electromechanical actuation elements may be used to allow a fine-grained control of the distance of the induction coil from the cooking surface.

The electromechanical actuation elements may e.g. comprise linear actuators or any other type of electrical motor and mechanical arrangement that allow positioning the induction coil or the movable carrying structure with respect to the cooking surface.

In another embodiment, the induction cooking device may comprise a distance control unit and a temperature sensor that is configured to measure the temperature of the induction coil and/or the at least one component of the driving circuit and that is coupled to the distance control unit. The distance control unit may be configured to control the actuators based on a temperature measured by the temperature sensor.

It is understood, that the distance control unit may e.g. be a dedicated distance control unit. Such a dedicated control unit may e.g. comprise a microcontroller or the like with respective drivers, e.g. switches or transistors, for the actuators. Further, position sensors may be provided that indicate to the control unit the distance of the carrying structure from the cooking surface.

As alternative, the distance control unit may also e.g. be integrated into another control unit in the induction cooking surface. The distance control unit may e.g. be integrated into a control unit or controller of the driving circuit.

The temperature sensor may be a single temperature sensor, e.g. provided at the switches of the driving circuit or at the induction coil. Further, multiple temperature sensors may be provided e.g. at the driving circuit and at the induction coil.

Further, additional switches like e.g. end switches may be provided at the minimum and maximum movement range or position of the movable carrying structure.

In a further embodiment, the temperature sensor may comprise an indirect temperature sensor, especially a current sensor.

As alternative to the above, the temperature may e.g. be derived from other system values, like e.g. the current through the induction coil. This current may e.g. be measured anyway with a current sensor in the driving circuit.

For example, a specific current threshold value may be determined and the carrying structure may be lowered if the current threshold value is exceeded by the measured current. If the measured current is lower than the current threshold value, the distance between the carrying structure and the cooking surface may be set to a minimum value.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an induction cooking device according to the present invention;
Fig. 2 shows a block diagram of another embodiment of an induction cooking device according to the present invention;
Fig. 3 shows a block diagram of another embodiment of an induction cooking device according to the present invention; and
Fig. 4 shows a flow diagram of an embodiment of a method according to the present invention.

In the figures like reference signs denote like elements unless stated otherwise.

### DETAILED DESCRIPTION OF THE DRAWINGS

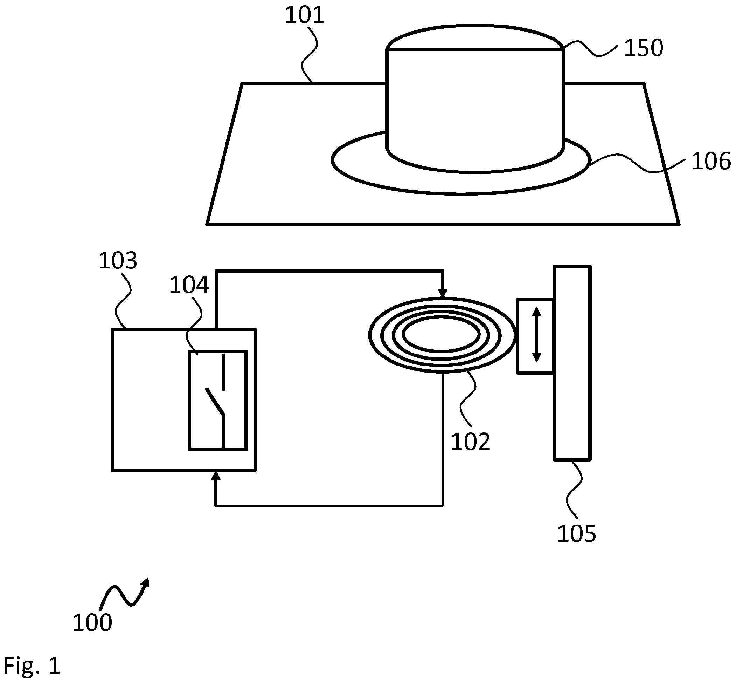

Fig. 1 shows a block diagram of an induction cooking device 100. The induction cooking device 100 comprises a cooking surface 101 with a cooking hob 106. On the cooking hob 106 a cooking vessel 150 may be provided for heating cooking goods. Further, an induction coil 102 is provided below the cooking surface 101. The induction coil 102 is electrically coupled to a driving circuit 103. In addition, in the induction cooking device 100 coil mount 105 is arranged under the cooking hob 106 and carries the induction coil 102.

During operation of the induction cooking device 100, the coil mount 105 dynamically adapts the distance between the induction coil 102 and the cooking surface 101 based on a temperature of the induction coil 102 and/or at least a component of the driving circuit 103, e.g. switching element 104. If the temperature of the induction coil 102 and/or at least a component of the driving circuit 103 increases e.g. to more than a predefined threshold, the coil mount 105 increases the distance between the induction coil 102 and the cooking surface 101, and vice versa.

This means, that if a specific temperature in the driving circuit 103 or the induction coil 102 is exceeded, the induction coil 102 will be lowered. It is understood, that the coil mount 105 may be configured such that lowering starts at a temperature that is not achieved under normal operating conditions, but only with cooking vessels that comprise inferior ferromagnetic properties. This temperature may e.g. be determined experimentally during development or design of the induction cooking device 100.

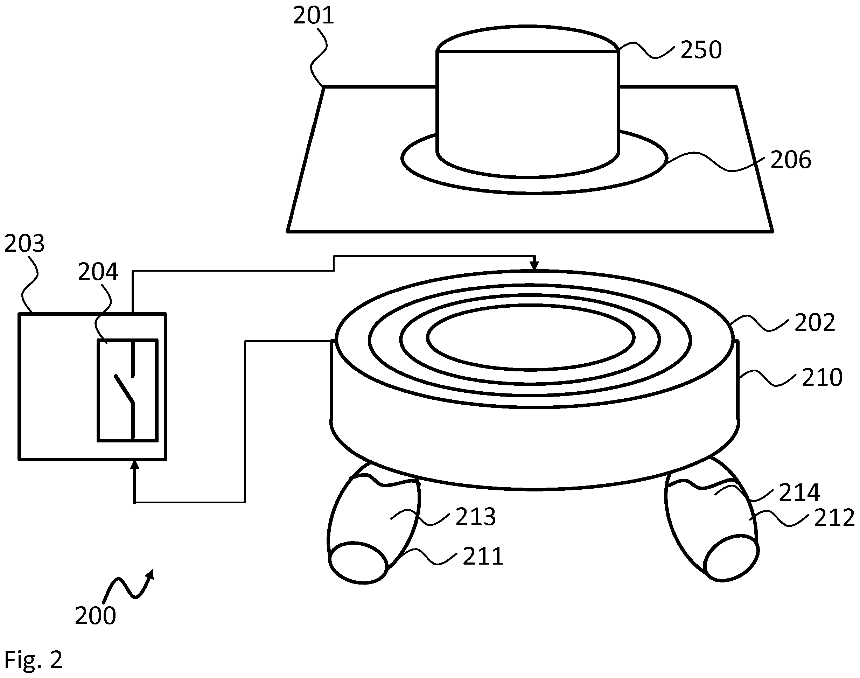

Fig. 2 shows a block diagram of another induction cooking device 200. The induction cooking device 200 is based on the induction cooking device 100. Therefore, the induction cooking device 200 comprises a cooking surface 201 with a cooking hob 206. On the cooking hob 206 a cooking vessel 250 is provided for heating cooking goods. Further, an induction coil 202 is provided below the cooking surface 201. The induction coil 202 is electrically coupled to a driving circuit 203. A schematic switching element 204 is shown in the driving circuit 203. In the induction cooking device 200 the coil mount is not explicitly shown. Instead a carrying structure 210 and actuators comprising flexible bodies 211, 212 filled with phase change materials 213, 214 are provided.

The carrying structure 210 carries the induction coil 202 and is mechanically coupled to the flexible bodies 211, 212, which are positioned under the carrying structure 210. As already explained above, the phase change materials 213, 214 may become soft or liquid when they are heated up to a specific temperature. If the phase change material 213, 214 becomes soft, the flexible bodies 211, 212 may be compressed by the weight of the carrying structure 210 and the induction coil 202. Alternatively, the phase change materials 213, 214 may expand when liquifying and may therefore expand the flexible bodies 211, 212 sideways, therefore contracting them vertically. To this end, the top and bottom of the flexible bodies 211, 212 may be non-flexible.

The embodiment of Fig. 2 therefore provides a very simple arrangement without the requirement of a dedicated electrical control.

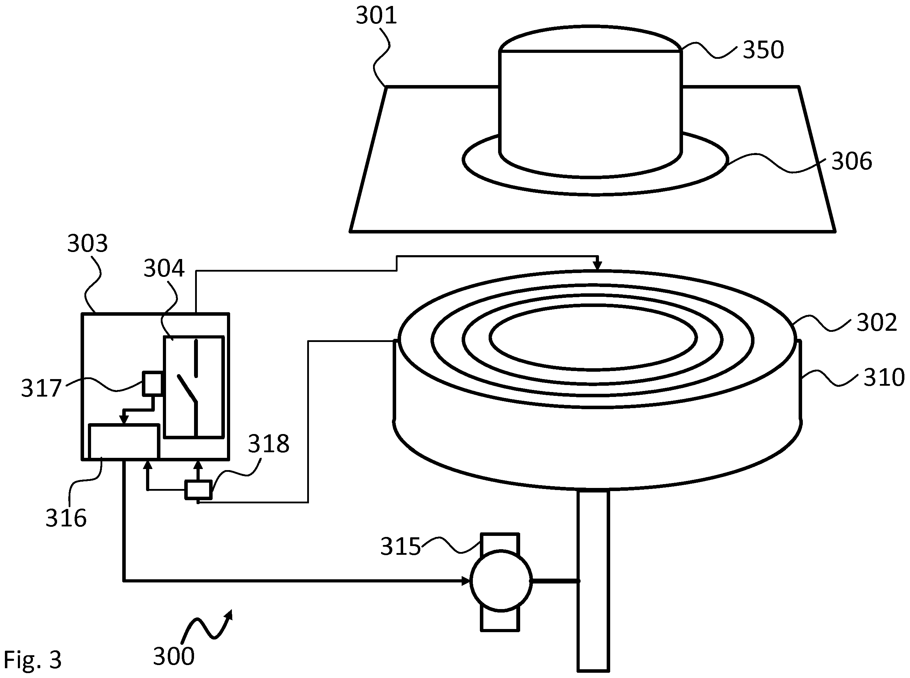

Fig. 3 shows a block diagram of another induction cooking device 300. The induction cooking device 300 is based on the induction cooking device 200. Therefore, the induction cooking device 300 comprises a cooking surface 301 with a cooking hob 306. On the cooking hob 306 a cooking vessel 350 is provided for heating cooking goods. Further, an induction coil 302 is provided below the cooking surface 301. The induction coil 302 is electrically coupled to a driving circuit 303. A schematic switching element 304 is shown in the driving circuit 303. In the induction cooking device 300 the coil mount is not explicitly shown. Instead of the flexible bodies 211, 212, the induction cooking device 300 comprises an electromechanical actuation element 315 that is provided under the carrying structure 310. Further, in the driving circuit 303 a distance control unit 316 is provided. The distance control unit 316 is coupled to the electromechanical actuation element 315 to control the electromechanical actuation element 315. Further, a temperature sensor 317 is provided at the switching element 304 and coupled to the distance control unit 316, and a current sensor 318 is provided in the power line from the induction coil 302 to the driving circuit 303. The current sensor 318 is also coupled to the distance control unit 316. It is understood, that the current sensor 318 may be used as alternative to the temperature sensor 317 and that only one of the two sensors 317, 318 may be provided.

The distance control unit 316 controls the electromechanical actuation element 315 based either on a temperature measured by the temperature sensor 317 or based on a current measured by the current sensor 318, or both. If the temperature or the current or both exceed a predetermined threshold value, the distance control unit 316 may control the electromechanical actuation element 315 to lower the induction coil 302 with respect to the cooking surface 301.

The current through the switching element 304 and the induction coil 302 influences the temperature of the switching element 304 and the induction coil 302. The current sensor 318 in this embodiment may therefore be seen as an indirect temperature sensor.

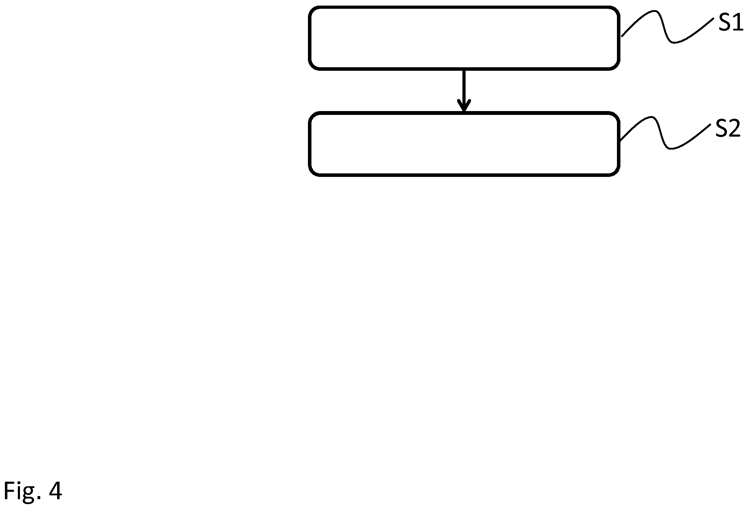

For sake of clarity in the following description of the method-based Fig. 4 the reference signs used above in the description of apparatus-based Figs. 1 - 3 will be maintained.

Fig. 4 shows a flow diagram of a method for operating an induction cooking device 100, 200, 300 with an induction coil 102, 202, 302 and a driving circuit 103, 203, 303 for heating a cooking vessel 150, 250, 350.

The method comprises operating S1 the induction coil 102, 202, 302 with the driving circuit 103, 203, 303, and dynamically adapting S2 the distance between the induction coil 102, 202, 302 and the cooking surface 101, 201, 301 based on a temperature of the induction coil 102, 202, 302 and/or the at least one component of the driving circuit 103, 203, 303, wherein the distance is increased with increasing temperature of the induction coil 102, 202, 302 and/or the at least one component of the driving circuit 103, 203, 303.

The step of adapting S2 may comprise moving a movable carrying structure 210, 310 that carries the induction coil 102, 202, 302 with a number of actuators.

Moving the movable carrying structure 210, 310 may be performed especially with two different options.

For example, a flexible body 211, 212 and a phase change material 213, 214 provided in the flexible body 211, 212 may be arranged such that when the phase change material 213, 214 heats up, the flexible body 211, 212 deforms and lowers the carrying structure 210, 310. The phase change material 213, 214 may comprise salt hydrates and/or paraffins and/or bio-based phase change materials 213, 214.

As alternative, moving the movable carrying structure 210, 310 may be performed with electromechanical actuation elements 315 and respective driving circuits 103, 203, 303. To this end, the temperature of the induction coil 102, 202, 302 and/or the at least one component of the driving circuit 103, 203, 303 may be measured and moving may comprise controlling the electromechanical actuation elements 315 based on the measured temperature. The temperature may be measured with a dedicated temperature sensor or with an indirect temperature sensor 317. The indirect temperature sensor 317 may e.g. comprise a current sensor 318. The carrying structure 210, 310 may be lowered if a predefined current threshold value is exceeded by a current measured by the current sensor 318. If the measured current is lower than the current threshold value, the carrying structure 210, 310 may e.g. be positioned in the position nearest to the cooking surface 101, 201, 301. As alternative, a linear relationship may be established between temperature/current and the distance.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides an induction cooking device 100, 200, 300 for heating a cooking vessel 150, 250, 350, the induction cooking device 100, 200, 300 comprising a cooking surface 101, 201, 301 comprising a cooking hob 106, an induction coil 102, 202, 302, a driving circuit 103, 203, 303 electrically coupled to the induction coil 102, 202, 302, and a coil mount 105 that is arranged under cooking hob 106, wherein the induction coil 102, 202, 302 is arranged on the coil mount 105 and wherein the coil mount 105 is configured to dynamically adapt the distance between the induction coil 102, 202, 302 and the cooking surface 101, 201, 301 based on a temperature of the induction coil 102, 202, 302 and/or at least a component of the driving circuit 103, 203, 303, wherein the coil mount 105 is configured to increase the distance between the induction coil 102, 202, 302 and the cooking surface 101, 201, 301 with increasing temperature of the induction coil 102, 202, 302 and/or the at least one component of the driving circuit 103, 203, 303.

### List of reference signs

- 100, 200, 300: induction cooking device
- 101, 201, 301: cooking surface
- 102, 202, 302: induction coil
- 103, 203, 303: driving circuit
- 104, 204, 205: switching element
- 105: coil mount
- 106: cooking hob

- 210, 310: carrying structure
- 211, 212: flexible body
- 213, 214: phase change material

- 315: electromechanical actuation element
- 316: distance control unit
- 317: temperature sensor
- 318: current sensor

- S1, S2: method steps

- 150, 250, 350: cooking vessel

## Claims

1. Induction cooking device (100, 200, 300) for heating a cooking vessel (150, 250, 350), the induction cooking device (100, 200, 300) comprising:
a cooking surface (101, 201, 301) comprising a cooking hob (106),
an induction coil (102, 202, 302),
a driving circuit (103, 203, 303) electrically coupled to the induction coil (102, 202, 302), and
a coil mount (105) that is arranged under the cooking hob (106), wherein the induction coil (102, 202, 302) is arranged on the coil mount (105),
**characterized in that**
the coil mount (105) is configured to dynamically adapt the distance between the induction coil (102, 202, 302) and the cooking surface (101, 201, 301) based on a temperature of the induction coil (102, 202, 302) and/or at least a component of the driving circuit (103, 203, 303), wherein the coil mount (105) is configured to increase the distance between the induction coil (102, 202, 302) and the cooking surface (101, 201, 301) with increasing temperature of the induction coil (102, 202, 302) and/or the at least one component of the driving circuit (103, 203, 303).

2. Induction cooking device (100, 200, 300) according to claim 1, wherein the coil mount (105) comprises a movable carrying structure (210, 310) configured to carry the induction coil (102, 202, 302), and a number of actuators configured to change the distance of the movable carrying structure (210, 310) from the cooking surface (101, 201, 301).

3. Induction cooking device (100, 200, 300) according to claim 2, wherein the actuators comprise a flexible body (211, 212) and a phase change material (213, 214) provided in the flexible body (211, 212).

4. Induction cooking device (100, 200, 300) according to claim 3, wherein the phase change material (213, 214) comprises salt hydrates and/or paraffins and/or bio-based phase change materials (213, 214).

5. Induction cooking device (100, 200, 300) according to claim 2, wherein the actuators comprise electromechanical actuation elements (315) and respective driving circuits (103, 203, 303).

6. Induction cooking device (100, 200, 300) according to claim 5, comprising a distance control unit (316) and a temperature sensor (317) that is configured to measure the temperature of the induction coil (102, 202, 302) and/or the at least one component of the driving circuit (103, 203, 303) and that is coupled to the distance control unit (316), wherein the distance control unit (316) is configured to control the actuators based on a temperature measured by the temperature sensor (317).

7. Induction cooking device (100, 200, 300) according to claim 6, wherein the temperature sensor (317) comprises an indirect temperature sensor (317), especially a current sensor (318).

8. Method for operating an induction cooking device (100, 200, 300) with an induction coil (102, 202, 302) and a driving circuit (103, 203, 303) for heating a cooking vessel (150, 250, 350), the method comprising:
operating (S1) the induction coil (102, 202, 302) with the driving circuit (103, 203, 303), and
**characterized by**
dynamically adapting (S2) the distance between the induction coil (102, 202, 302) and the cooking surface (101, 201, 301) based on a temperature of the induction coil (102, 202, 302) and/or the at least one component of the driving circuit (103, 203, 303), wherein the distance is increased with increasing temperature of the induction coil (102, 202, 302) and/or the at least one component of the driving circuit (103, 203, 303).

9. Method according to claim 8, wherein adapting comprises moving a movable carrying structure (210, 310) that carries the induction coil (102, 202, 302) with a number of actuators.

10. Method according to claim 9, wherein moving the movable carrying structure (210, 310) is performed with a flexible body (211, 212) and a phase change material (213, 214) provided in the flexible body (211, 212).

11. Method according to claim 10, wherein the phase change material (213, 214) comprises salt hydrates and/or paraffins and/or bio-based phase change materials (213, 214).

12. Method according to claim 9, wherein moving a movable carrying structure (210, 310) is performed with electromechanical actuation elements (315) and respective driving circuits (103, 203, 303).

13. Method according to claim 12, comprising measuring the temperature of the induction coil (102, 202, 302) and/or the at least one component of the driving circuit (103, 203, 303), wherein moving comprises controlling the electromechanical actuation elements (315) based on the measured temperature.

14. Method according to claim 13, wherein the temperature is measured with an indirect temperature sensor (317).

15. Method according to claim 14, wherein the indirect temperature sensor (317) comprises a current sensor (318), and wherein the carrying structure (210, 310) is lowered if a predefined current threshold value is exceeded by a current measured by the current sensor (318), and wherein if the measured current is lower than the current threshold value, the carrying structure (210, 310) is positioned in the position nearest to the cooking surface (101, 201, 301).

## Patentansprüche

1. Induktionskochvorrichtung (100, 200, 300) zum Erhitzen eines Kochgefäßes (150, 250, 350), wobei die Induktionskochvorrichtung (100, 200, 300) umfasst:
eine Kochfläche (101, 201, 301) mit einem Kochfeld (106),
eine Induktionsspule (102, 202, 302),
eine Treiber-Schaltung (103, 203, 303), die elektrisch mit der Induktionsspule (102, 202, 302) verbunden ist, und
eine Spulenhalterung (105), die unter dem Kochfeld (106) angeordnet ist, wobei die Induktionsspule (102, 202, 302) auf der Spulenhalterung (105) angeordnet ist,
**dadurch gekennzeichnet, dass**
die Spulenhalterung (105) so konfiguriert ist, dass sie den Abstand zwischen der Induktionsspule (102, 202, 302) und der Kochfläche (101, 201, 301) dynamisch anhand einer Temperatur der Induktionsspule (102, 202, 302) und/oder zumindest einer Komponente der Treiber-Schaltung (103, 203, 303) anpasst, wobei die Spulenhalterung (105) so konfiguriert ist, dass sie den Abstand zwischen der Induktionsspule (102, 202, 302) und der Kochfläche (101, 201, 301) bei zunehmender Temperatur der Induktionsspule (102, 202, 302) und/oder der zumindest einen Komponente der Treiber-Schaltung (103, 203, 303) erhöht.

2. Induktionskochvorrichtung (100, 200, 300) gemäß Anspruch 1, wobei die Spulenhalterung (105) eine bewegliche Tragstruktur (210, 310) umfasst, die dazu konfiguriert ist, die Induktionsspule (102, 202, 302) zu tragen, und eine Anzahl von Stellgliedern, die dazu konfiguriert sind, den Abstand der beweglichen Tragstruktur (210, 310) von der Kochfläche (101, 201, 301) zu verändern.

3. Induktionskochvorrichtung (100, 200, 300) gemäß Anspruch 2, wobei die Stellglieder einen flexiblen Körper (211, 212) und ein Phasenwechselmaterial (213, 214) umfassen, das im flexiblen Körper (211, 212) bereitgestellt ist.

4. Induktionskochvorrichtung (100, 200, 300) gemäß Anspruch 3, wobei das Phasenwechselmaterial (213, 214) Salzhydrate und/oder Paraffine und/oder bio-basierte Phasenwechselmaterialien (213, 214) umfasst.

5. Induktionskochvorrichtung (100, 200, 300) gemäß Anspruch 2, wobei die Stellglieder elektromechanische Aktuationselemente (315) und zugehörige Treiber-Schaltungen (103, 203, 303) umfassen.

6. Induktionskochvorrichtung (100, 200, 300) gemäß Anspruch 5, die eine Abstandsregel-Einheit (316) und einen Temperatursensor (317) umfasst, der dazu konfiguriert ist, die Temperatur der Induktionsspule (102, 202, 302) und/oder der zumindest einen Komponente der Treiber-Schaltung (103, 203, 303) zu messen und der mit der Abstandsregel-Einheit (316) gekoppelt ist, wobei die Abstandsregel-Einheit (316) dazu konfiguriert ist, die Stellglieder anhand einer von dem Temperatursensor (317) gemessenen Temperatur zu steuern.

7. Induktionskochvorrichtung (100, 200, 300) gemäß Anspruch 6, wobei der Temperatursensor (317) einen indirekten Temperatursensor (317), insbesondere einen Stromsensor (318), umfasst.

8. Verfahren zum Betreiben einer Induktionskochvorrichtung (100, 200, 300) mit einer Induktionsspule (102, 202, 302) und einer Treiber-Schaltung (103, 203, 303) zum Erhitzen eines Kochgefäßes (150, 250, 350), das Verfahren umfasst:
Betreiben (S1) der Induktionsspule (102, 202, 302) mit der Treiber-Schaltung (103, 203, 303), und
**dadurch gekennzeichnet, dass**
der Abstand zwischen der Induktionsspule (102, 202, 302) und der Kochfläche (101, 201, 301) dynamisch anhand einer Temperatur der Induktionsspule (102, 202, 302) und/oder zumindest einer Komponente der Treiber-Schaltung (103, 203, 303) angepasst wird (S2), wobei der Abstand bei zunehmender Temperatur der Induktionsspule (102, 202, 302) und/oder der zumindest einen Komponente der Treiber-Schaltung (103, 203, 303) erhöht wird.

9. Verfahren gemäß Anspruch 8, wobei das Anpassen das Bewegen einer beweglichen Tragstruktur (210, 310), die die Induktionsspule (102, 202, 302) trägt, mit einer Anzahl von Stellgliedern umfasst.

10. Verfahren gemäß Anspruch 9, wobei das Bewegen der beweglichen Tragstruktur (210, 310) mit einem flexiblen Körper (211, 212) und einem Phasenwechselmaterial (213, 214), das im flexiblen Körper (211, 212) bereitgestellt ist, durchgeführt wird.

11. Verfahren gemäß Anspruch 10, wobei das Phasenwechselmaterial (213, 214) Salzhydrate und/oder Paraffine und/oder bio-basierte Phasenwechselmaterialien (213, 214) umfasst.

12. Verfahren gemäß Anspruch 9, wobei das Bewegen einer beweglichen Tragstruktur (210, 310) mit elektromechanischen Aktuationselementen (315) und zugehörigen Treiber-Schaltungen (103, 203, 303) durchgeführt wird.

13. Verfahren gemäß Anspruch 12, dass das Messen der Temperatur der Induktionsspule (102, 202, 302) und/oder der zumindest einen Komponente der Treiber-Schaltung (103, 203, 303) umfasst, wobei das Bewegen das Steuern der elektromechanischen Aktuationselemente (315) anhand der gemessenen Temperatur umfasst.

14. Verfahren gemäß Anspruch 13, wobei die Temperatur mit einem indirekten Temperatursensor (317) gemessen wird.

15. Verfahren gemäß Anspruch 14, wobei der indirekte Temperatursensor (317) einen Stromsensor (318) umfasst, und wobei die Tragstruktur (210, 310) herabgelassen wird, wenn ein vordefinierter Stromschwellenwert von einem vom Stromsensor (318) gemessenen Strom überschritten wird, und wobei, wenn der gemessene Strom niedriger als der Stromschwellenwert ist, die Tragstruktur (210, 310) in der positioniert wird, die der Kochfläche (101, 201, 301) am nächsten ist.

## Revendications

1. Dispositif de cuisson par induction (100, 200, 300) pour chauffer un récipient de cuisson (150, 250, 350), le dispositif de cuisson par induction (100, 200, 300) comprenant :
une surface de cuisson (101, 201, 301) comprenant une plaque de cuisson (106),
une bobine d'induction (102, 202, 302),
un circuit de commande (103, 203, 303) couplé électriquement à la bobine d'induction (102, 202, 302), et
un support de bobine (105) qui est disposé sous la plaque de cuisson (106), dans lequel la bobine d'induction (102, 202, 302) est disposée sur le support de bobine (105),
**caractérisé en ce que**
le support de bobine (105) est configuré pour adapter dynamiquement la distance entre la bobine d'induction (102, 202, 302) et la surface de cuisson (101, 201, 301) sur la base d'une température de la bobine d'induction (102, 202, 302) et/ou d'au moins un composant du circuit d'entraînement (103, 203, 303), dans lequel le support de bobine (105) est configuré pour augmenter la distance entre la bobine d'induction (102, 202, 302) et la surface de cuisson (101, 201, 301) avec l'augmentation de la température de la bobine d'induction (102, 202, 302) et/ou du au moins un composant du circuit d'entraînement (103, 203, 303).

2. Dispositif de cuisson par induction (100, 200, 300) selon la revendication 1, dans lequel le support de bobine (105) comprend une structure de support mobile (210, 310) configurée pour porter la bobine d'induction (102, 202, 302), et un certain nombre d'actionneurs configurés pour changer la distance de la structure de support mobile (210, 310) de la surface de cuisson (101, 201, 301).

3. Dispositif de cuisson par induction (100, 200, 300) selon la revendication 2, dans lequel les actionneurs comprennent un corps flexible (211, 212) et un matériau à changement de phase (213, 214) prévu dans le corps flexible (211, 212).

4. Dispositif de cuisson par induction (100, 200, 300) selon la revendication 3, dans lequel le matériau à changement de phase (213, 214) comprend des hydrates de sel et/ou des paraffines et/ou des matériaux à changement de phase biosourcés (213, 214).

5. Dispositif de cuisson par induction (100, 200, 300) selon la revendication 2, dans lequel les actionneurs comprennent des éléments d'actionnement électromécaniques (315) et des circuits de commande respectifs (103, 203, 303).

6. Dispositif de cuisson par induction (100, 200, 300) selon la revendication 5, comprenant une unité de commande de distance (316) et un capteur de température (317) qui est configuré pour mesurer la température de la bobine d'induction (102, 202, 302) et/ou le au moins un composant du circuit d'entraînement (103, 203, 303) et qui est couplé à l'unité de commande de distance (316), dans lequel l'unité de commande de distance (316) est configurée pour commander les actionneurs sur la base d'une température mesurée par le capteur de température (317).

7. Dispositif de cuisson par induction (100, 200, 300) selon la revendication 6, dans lequel le capteur de température (317) comprend un capteur de température indirect (317), notamment un capteur de courant (318).

8. Méthode de fonctionnement d'un dispositif de cuisson par induction (100, 200, 300) avec une bobine d'induction (102, 202, 302) et un circuit de commande (103, 203, 303) pour chauffer un récipient de cuisson (150, 250, 350), la méthode comprenant :
le fonctionnement (S1) de la bobine d'induction (102, 202, 302) avec le circuit d'entraînement (103, 203, 303), et
**caractérisé par**
l'adaptation dynamique (S2) de la distance entre la bobine d'induction (102, 202, 302) et la surface de cuisson (101, 201, 301) sur la base d'une température de la bobine d'induction (102, 202, 302) et/ou du au moins un composant du circuit d'entraînement (103, 203, 303), dans lequel la distance est augmentée avec l'augmentation de la température de la bobine d'induction (102, 202, 302) et/ou du au moins un composant du circuit d'entraînement (103, 203, 303).

9. Méthode selon la revendication 8, dans laquelle l'adaptation comprend le déplacement d'une structure porteuse mobile (210, 310) qui porte la bobine d'induction (102, 202, 302) avec un certain nombre d'actionneurs.

10. Méthode selon la revendication 9, dans laquelle le déplacement de la structure porteuse mobile (210, 310) est effectué avec un corps flexible (211, 212) et un matériau à changement de phase (213, 214) prévu dans le corps flexible (211, 212).

11. Méthode selon la revendication 10, dans laquelle le matériau à changement de phase (213, 214) comprend des hydrates de sel et/ou des paraffines et/ou des matériaux à changement de phase biosourcés (213, 214).

12. Méthode selon la revendication 9, dans laquelle le déplacement d'une structure porteuse mobile (210, 310) est effectué avec des éléments d'actionnement électromécaniques (315) et des circuits de commande respectifs (103, 203, 303).

13. Méthode selon la revendication 12, comprenant la mesure de la température de la bobine d'induction (102, 202, 302) et/ou du au moins un composant du circuit d'entraînement (103, 203, 303), dans laquelle le déplacement comprend la commande des éléments d'actionnement électromécaniques (315) sur la base de la température mesurée.

14. Méthode selon la revendication 13, dans laquelle la température est mesurée avec un capteur de température indirect (317).

15. Méthode selon la revendication 14, dans laquelle le capteur de température indirecte (317) comprend un capteur de courant (318), et dans laquelle la structure porteuse (210, 310) est abaissée si une valeur seuil de courant prédéfinie est dépassée par un courant mesuré par le capteur de courant (318), et dans laquelle si le courant mesuré est inférieur à la valeur seuil de courant, la structure porteuse (210, 310) est positionnée dans la position la plus proche de la surface de cuisson (101, 201, 301).
